# EUROPEAN PATENT APPLICATION

(11) **EP 4 651 401 A1**
(43) Date of publication of application: **19.11.2025**
(21) Application number: 25174472.8
(22) Date of filing: 06.05.2025
(51) Int. Cl.: H04B 10/40, H04J 14/02

(54) **CWDM BIDIRECTIONAL CIRCUIT USING SILICON PHOTONICS**

(30) Priority: 14.05.2024 US 202418663437
(71) Applicant: Avago Technologies International Sales Pte. Limited, Singapore 768923 (SG)
(72) Inventor: Margalit, Near, Irvine, CA, 92618 (US); Eid, Nourhan, Irvine, CA, 92618 (US); Lin, Shiyun, Irvine, CA, 92618 (US)
(74) Representative: Grünecker Patent- und Rechtsanwälte PartG mbB

(57) **Abstract**

A circuit for bidirectional CWDM communication is provided. The circuit includes a polarization splitter rotator, and a first filter. The first filter is configured to demultiplex two or more respective wavelengths from an input signal split by the polarization splitter rotator. The first filter includes a first set of demultiplexer channels, and a first set multiplexer channels, wherein the first set of demultiplexer channels includes a first demultiplexer stage, the first demultiplexer stage including a first number of first component filters, and a second demultiplexer stage including a second number of second component filters having a second passband. The first set of multiplexer channels includes a first multiplexer stage including a third number of third component filters, and a second multiplexer stage including a fourth number of fourth component filters, wherein the third number is less than the first number, and fourth number is less than the second number.

## Description

### COPYRIGHT STATEMENT

A portion of the disclosure of this patent document contains material that is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### FIELD

The present disclosure relates, in general, to methods, systems, and apparatuses for bidirectional (BIDI) coarse wavelength divisional multiplexing (CWDM) circuit implementation in transceivers.

### BACKGROUND

Conventional approaches to increasing speed and capacity within optical links, such as increasing the density of wavelengths within a single fiber (e.g., additional channels in a WDM system), or increasing the fiber channel count, result in compromises to performance, such as receiver (Rx) cross-talk (x-talk), increased complexity and costs, and reduced yield.

Accordingly, a CWDM BIDI circuit is set forth, allowing for the same fiber channel to carry both transmit (Tx) and Rx channels is provided.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Fig. 1 is a schematic block diagram of a BIDI circuit, in accordance with various embodiments;
Fig. 2 is a schematic block diagram of an alternative implementation of a BIDI circuit with a hybrid filter, in accordance with various embodiments;
Fig. 3 is a schematic block diagram of a BIDI hybrid WDM filter, in accordance with various embodiments; and
Fig. 4 is a schematic block diagram of an optical transceiver system, in accordance with various embodiments.

### DETAILED DESCRIPTION OF EMBODIMENTS

Various embodiments set forth a CWDM BIDI circuit using silicon photonics in an optical transceiver.

In some embodiments, a circuit for CWDM BIDI using silicon photonics is provided. The circuit includes a polarization splitter rotator, and a first filter. The polarization splitter rotator is configured to receive an input signal comprising two or more wavelengths, the input signal further comprising a first signal having a first polarization and a second signal having a second polarization. The polarization splitter rotator is configured to split the first and second signals, wherein splitting the first and second signals comprises directing the first signal to a first path, and the second signal to a second path. The polarization splitter rotator is further configured to rotate the second signal, wherein rotating the second signal changes a polarization of the second signal to have the first polarization. The first filter is coupled to the first path, and configured to demultiplex two or more respective wavelengths from the first signal received from the first path. The first filter includes a first set of demultiplexer channels, and a first set multiplexer channels. The first set of demultiplexer channels includes two or more first demultiplexer channels. The first set of demultiplexer channels includes a first demultiplexer stage, the first demultiplexer stage including a first number of first component filters, and a second demultiplexer stage including a second number of second component filters having a second passband. The first set of multiplexer channels includes two or more multiplexer channels, wherein the first set of multiplexer channels includes a first multiplexer stage including a third number of third component filters, and a second multiplexer stage including a fourth number of fourth component filters, where the third number is less than the first number, and fourth number is less than the second number.

In further embodiments, a transceiver system for CWDM BIDI using silicon photonics is provided. The system includes a polarization splitter rotator, a first filter, and two or more photodetectors. The polarization splitter rotator is configured to receive an input signal comprising two or more wavelengths, the input signal further comprising a first signal having a first polarization and a second signal having a second polarization. The polarization splitter rotator is configured to split the first and second signals, wherein splitting the first and second signals comprises directing the first signal to a first path, and the second signal to a second path. The polarization splitter rotator is further configured to rotate the second signal, wherein rotating the second signal changes a polarization of the second signal to have the first polarization. The first filter is coupled to the first path, and configured to demultiplex two or more respective wavelengths from the first signal received from the first path. The first filter includes a first set of demultiplexer channels, and a first set multiplexer channels. The first set of demultiplexer channels includes two or more first demultiplexer channels. The first set of demultiplexer channels includes a first demultiplexer stage, the first demultiplexer stage including a first number of first component filters, and a second demultiplexer stage including a second number of second component filters having a second passband. The first set of multiplexer channels includes two or more multiplexer channels, wherein the first set of multiplexer channels includes a first multiplexer stage including a third number of third component filters, and a second multiplexer stage including a fourth number of fourth component filters, where the third number is less than the first number, and fourth number is less than the second number. The two or more photodetectors may be coupled to a respective demultiplexer channel of the two or more demultiplexer channels, each photodetector configured to detect an amplitude of a respective wavelength of the two or more respective wavelengths of the first signal.

In further embodiments, a filter for CWDM BIDI is provided. The filter includes a first side coupled to a first path, wherein a first signal is received from the first path, and a second side coupled to one or more photodetectors and one or more lasers, and a first set of demultiplexer channels comprising two or more demultiplexer channels, wherein the first set of demultiplexer channels includes a first demultiplexer stage, the first demultiplexer stage including a first number of first component filters, and a second demultiplexer stage including a second number of second component filters having a second passband. The filter further includes a first set multiplexer channels comprising two or more multiplexer channels, wherein the first set of multiplexer channels includes a first multiplexer stage including a third number of third component filters, and a second multiplexer stage including a fourth number of fourth component filters, wherein the third number is less than the first number, and fourth number is less than the second number.

In the following description, for the purposes of explanation, numerous details are set forth to provide a thorough understanding of the described embodiments. It will be apparent to one skilled in the art, however, that other embodiments may be practiced without some of these details. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

When an element is referred to herein as being "connected" or "coupled" to another element (which includes mechanically, electrically, or communicatively connecting or coupling), it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Increasing the speed and capacity of optical links has typically relied on adding channels and/or increasing wavelength density within the optical links. For example, adding channels to the optical link may include increasing the number of channels by increasing the range of wavelengths over which communication may be conducted (e.g., defining one or more additional channels over additional wavelengths). This approach, however, leads to increased complexity and costs. Increase wavelength density includes increasing the number of channels within an established range of wavelengths (e.g., more channels defined within an existing range of wavelengths). This approach leads to increased Rx x-talk.

Thus, a CWDM BIDI circuit is proposed, configured to allow a single fiber channel to be used for both Tx and Rx operation by interleaving the Tx and Rx channel across multiple wavelengths. The CWDM BIDI circuit, set forth below, utilizes a silicon photonics receiver architecture, avoiding the need to implement further signal processing and detection schemes to accommodate BIDI transmission. By implementing BIDI transmission, the capacity of optical links is effectively doubled without compromise to performance as above with respect to the conventional approaches.

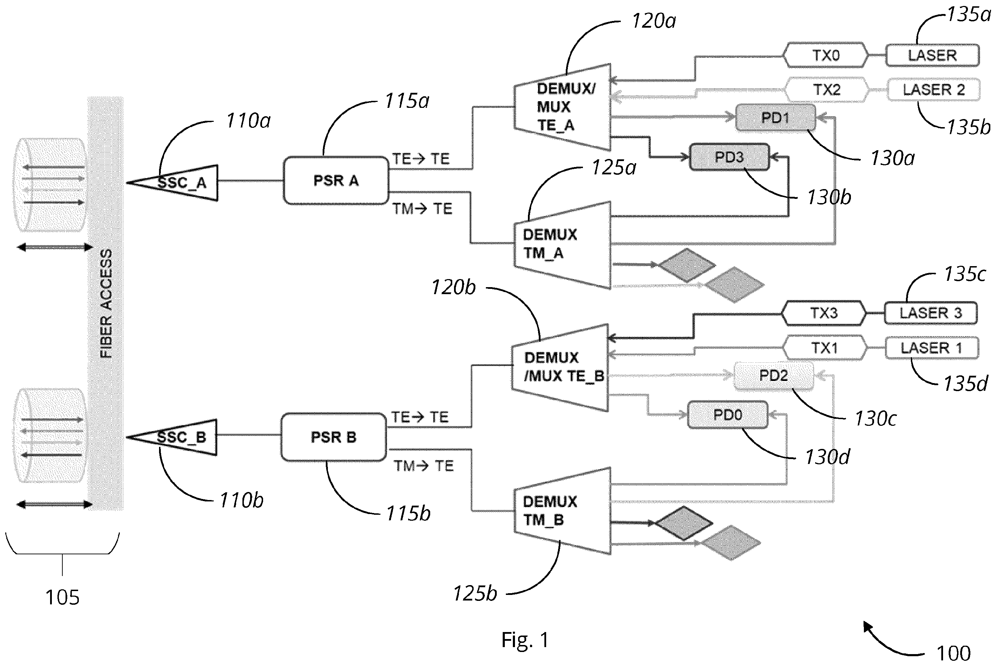

Fig. 1 is a schematic block diagram of a BIDI circuit 100, in accordance with various embodiments. The circuit 100 includes a fiber access interface 105, a first coupler 110a and second coupler 110b (collectively "couplers" 110), a first polarization splitter rotator (PSR) 115a and second PSR 115b (collectively, "PSRs" 115), a first wavelength division multiplexing (WDM) filter 120a and second WDM filter 120b (collectively "WDM filters 120"), a third WDM filter 125a and fourth WDM filter 125b (collectively "WDM filters 125"), a first photodetector (PD) 130a, second PD 130b, third PD 130c, and fourth PD 130d, first laser 135a, second laser 135b, third laser 135c, and fourth laser 135d. It should be noted that the various elements of the circuit 100 are schematically illustrated in Fig. 1, and that modifications to the various components and other arrangements of the circuit 100 may be possible and in accordance with the various embodiments.

In various embodiments, the circuit 100 is a BIDI optical transceiver circuit for receiving and transmitting signals over the same fiber channel. As used herein, the terms "fiber channel" and "optical link" may be used interchangeably to refer to a fiber optical connection over a respective optical fiber. Thus, when receive and transmit signals are carried over the "same fiber channel," both receive and transmit signals are carried within the same (e.g., a single) optical fiber. While in some examples below, two optical fibers may be coupled together (e.g., via respective couplers 110), both Rx and Tx signals may be carried by a single fiber along the optical path.

Specifically, the circuit 100 may depict two separate BIDI circuits, a first BIDI circuit depicted on the top half and a second BIDI circuit depicted on the bottom half. The first BIDI circuit and second BIDI circuit may be configured to engage in BIDI communications with each other over the same optical fiber (depicted to the left of the fiber access interface 105).

The circuit 100, accordingly, includes a fiber access interface 105, which may collectively refer to an optical fiber (or set of optical fibers) and associated terminations. In some examples, an optical fiber of the fiber access interface 105 may be respectively coupled to a coupler, such as the first or second couplers 110a, 110b. Accordingly, in various examples, the couplers 110 may be optical couplers configured to interface with a respective optical fiber. In some examples, the couplers 110 may be single-mode standard couplers directly coupling the optical fiber from the fiber access interface 105 to another optical fiber in the optical path. In other examples, different types of connectors may be utilized to couple to the optical fiber of the fiber access interface, such as, without limitation, a standard coupler (SC), surface coupler, local connector (LC), ferrule connector (FC), straight tip (ST), or other suitable connector standard. Accordingly, the termination and connection to the optical fiber are not limited to any single standard, and descriptions of the couplers 110 are provided by way of nonlimiting example for purposes of explanation.

Accordingly, in various examples, signals from the optical fiber may be carried (via a respectively coupled optical fiber) to a respective one of the first PSR 115a or second PSR 115b. The PSRs 115, in various embodiments, may be a type of optical coupler (e.g., a directional coupler), such as a waveguide or other silicon photonic structure. The PSRs 115 may be configured to split a respective incoming signal (e.g., an Rx signal) from an optical fiber onto two paths based on a polarization of the Rx signal. For example, a transverse electric (TE) polarized component of the Rx signal may be split (e.g., extracted) from the Rx signal and passed to a first path (e.g., a "TE path"). Similarly, a transverse magnetic (TM) polarized component of the Rx signal may be split and passed to a second path (e.g., a "TM path"). The TM polarized signal may further be rotated (e.g., the polarization may be rotated) by the respective PSR 115a, 115b to have the same polarization as the signal on the first path - TE polarized in this example. "Rotation," as used herein, refers to optical rotation of the signal (or polarization rotation). TE polarization refers to a polarization mode (e.g., TE-mode), in which the electric field vector is oriented in a direction perpendicular to the direction of propagation, and TM polarization refers to a polarization mode (E.g., TM-mode) in which the magnetic field vector is perpendicular to the direction of propagation. In other further examples, the Rx signal may be rotated before splitting. Thus, the order in which the Rx signal is split and rotated may be switched. Accordingly, a PSR 115 may be an optical component that acts both as a polarization splitter and polarization rotator.

As described above, the circuit 100 allows the same fiber channel to be utilized for both Tx and Rx communication. Specifically, Tx and Rx channels may be interleaved across multiple wavelengths. For example, in some embodiments, in each WDM fiber channel, half of the wavelength channels may be allocated to Rx communication, and half of the wavelengths may be allocated to Tx communication. In other embodiments, channels may be allocated differently between Tx and Rx (e.g., a different split of Tx and Rx channels).

In various examples, the Tx path may be TE-polarized, due to the nature of laser source polarization. During transmission in the fiber, the polarization may be rotated (e.g., via a respective PSR 115a, 115b). The Rx path, in comparison, may be polarization insensitive. The respective PSR 115a, 115b may split an incoming signal (e.g., an Rx signal) as previously described, to a TE path and TM path. The TM polarized component of the Rx signal may be rotated to have a TE polarization. The split Rx signals may be demultiplexed by a filter, such as respective WDM filters 120 and/or WDM filters 125, and combined in respective PD 130a, 130b, 130c, 130d for polarization insensitive amplitude detection.

Accordingly, in various embodiments, the WDM filters 120, 125 may be demultiplexer / multiplexer (demux/mux) filters, configured to provide optical demultiplexing / multiplexing (e.g., both demultiplexing and multiplexing functions). When a split Rx signal is received from the respective PSR 115a, 115b, the signal may be received at the demultiplexing side of the demux/mux. In some embodiments, the first wavelength of the TE path may be extracted (e.g., demultiplexed from the TE component of the Rx signal) via first WDM filter 120a, and combined with the output of the third WDM filter 125a, which may similarly demultiplex the signals of the first wavelength from the Rx signal on the TM path. The outputs may be combined at a respective PD, in this example, the first PD 130a. Similarly, a second wavelength of the Rx signal may be demultiplexed from the TE and TM paths via respective WDM filters 120a, 125a. The outputs of the WDM filters 120a, 125a of the second wavelength may be combined at respective PD, in this example, the second PD 130b.

A respective Rx signal may similarly be filtered via the second WDM filter 120b, and fourth WDM filter 125b. For example, a third wavelength may be demultiplexed from the Rx signal via the respective WDM filters 120b, 125b, and combined at respective PD, in this example, the third PD 130c. A fourth wavelength may similarly be demultiplexed (via WDM filters 120b, 125b) and combined at the respective PD (e.g., fourth PD 130d). Thus, in some embodiments, each PD 130a-130d may be configured to detect the amplitude of a signal (e.g., light) of a respective wavelength.

For Tx signals, an optical signal from a Tx circuit (e.g., lasers 135a-135d and respective driver circuits), may be passed through WDM filter 120a, 120b and transmitted over the TE channel of the PSR 105 to the optical fiber via fiber access interface 105. Specifically, a Tx signal may be received, at the mux side of the demux/mux of WDM filter 120a, 120b, to be multiplexed / passed to the TE-channel. As before, the Rx signal carried in the optical fiber will have a different wavelength (or one or more wavelengths), which (as previously described) will be split to TE and TM paths. The Rx signal is demultiplexed by the same WDM filter 120a, 120b, which will combine in the respective PD 130a-130d with the signal from the TM path, as demultiplexed by WDM filter 125a, 125b.

As the wavelengths of each fiber channel are allocated between Rx and Tx signals (e.g., half the wavelengths allocated to Rx and half of the wavelengths allocated to Tx), the effective number of impacting channels is halved, while spacing between respective Rx channels and Tx channels is doubled. Thus, a significant reduction in Rx x-talk may be achieved.

As depicted, the first laser 135a may generate a signal having a first wavelength, second laser 135b may generate a signal having a second wavelength. These may be transmitted using a first BIDI circuit of the circuit 100. These signals may be transmitted over the TE path, to the first PSR 115a, and over fiber to the second BIDI circuit of the circuit 100. Accordingly, the Rx signal carried over the fiber may include a first wavelength and second wavelength. This Rx signal is then split, and passed onto separate TE and TM paths by the second PSR 115b. The second WDM filter 120b and fourth WDM filter 125b may filter the respective first wavelength from the split Rx signal (e.g., TE path and TM path signals), to be combined at the third PD 130c, which is configured to detect the amplitude of signals having the first wavelength. Similarly, a signal having the second wavelength may be filtered (e.g., demultiplexed via WDM filters 120b, 125b) and combined at fourth PD 230d, which is configured to detect the amplitude of signals having the second wavelength.

Similarly, signals generated by the third and fourth lasers 135c, 135d may be carried over the same optical fiber for transmission (Rx by the first BIDI circuit of the circuit 100). The third laser 135c may generate a signal having a third wavelength, and the fourth laser 135d may generate a signal having a fourth wavelength. Lasers 135 may be referred to as a light source, and in various examples, various types of lasers may be utilized. For example, lasers 135 may include, without limitation, vertical cavity surface emitting lasers (VCSEL) or tunable laser diodes (TDL), among others.

Accordingly, WDM filters 120a, 125a may be configured to demultiplex the Rx signal (transmitted from the second BIDI circuit of the circuit 100), to output a signal having the third wavelength, which may be output and combined at the first PD 130a. The first PD 130a may, accordingly, be configured to detect an amplitude of signal(s) having the third wavelength. The WDM filters 120a, 125a may further output a signal having the fourth wavelength, which may be output to the second PD 130b. The second PD 130b may, in this example, be configured to detect an amplitude of signal(s) having the fourth wavelength. Thus, circuit 100 depicts a transceiver system in which two BIDI circuits are able to transmit and receive signals simultaneously over the same optical fiber.

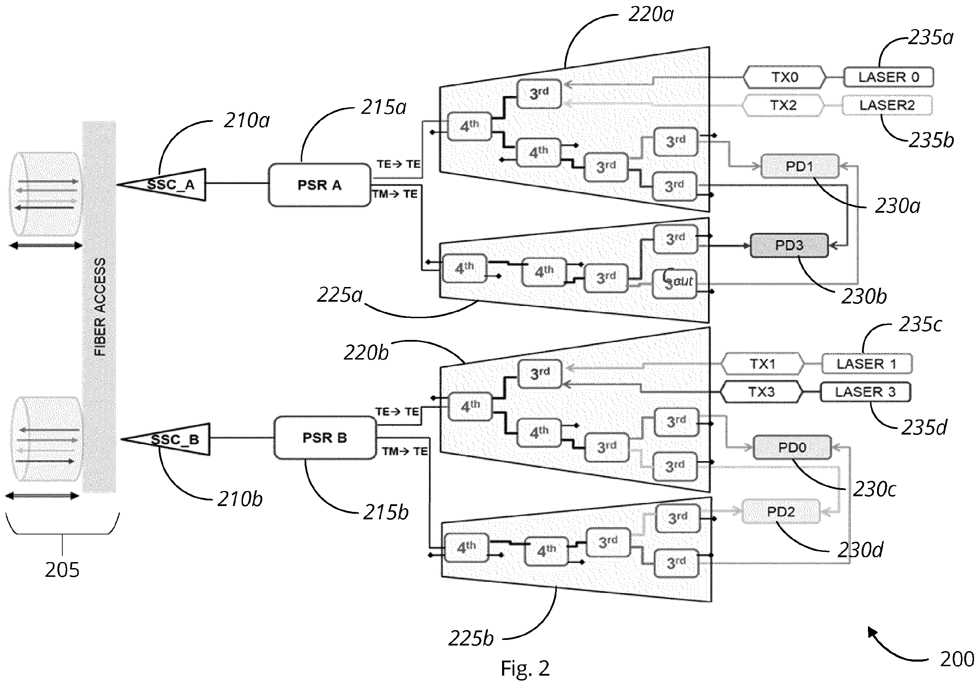

Fig. 2 is a schematic block diagram of an alternative implementation of a BIDI circuit 200 with a hybrid filter, in accordance with various embodiments. The circuit 200 includes a fiber access interface 205, a first coupler 210a and second coupler 210b (collectively "couplers" 210), a first polarization splitter rotator (PSR) 215a and second PSR 215b (collectively, "PSRs" 215), a first hybrid WDM filter 220a and second BIDI WDM filter 220b (collectively "hybrid WDM filters 220"), a first WDM filter 225a and second WDM filter 225b (collectively "WDM filters 225"), a first PD 230a, second PD 230b, third PD 230c, and fourth PD 230d, first laser 235a, second laser 235b, third laser 235c, and fourth laser 235d. It should be noted that the various elements of the circuit 200 are schematically illustrated in Fig. 2, and that modifications to the various components and other arrangements of the circuit 200 may be possible and in accordance with the various embodiments.

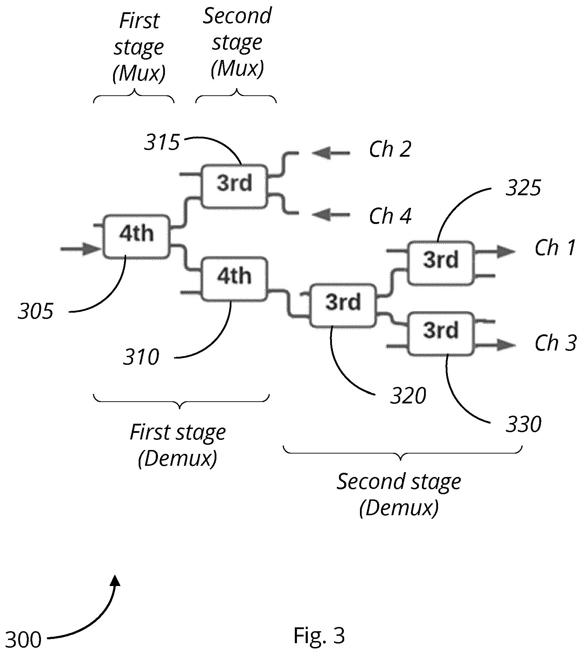

As previously described with respect to Fig. 1, the circuit 200 includes a fiber access interface 205, which includes respective optical fibers coupled to a respective coupler 210a, 210b. The couplers 210 may couple the optical fiber to a respective PSR 215a, 215b. In contrast with the embodiments depicted in Fig. 1, however, the circuit 200 further includes a first and second hybrid WDM filters 220a, 220b. The hybrid WDM filters 220 are described in greater detail below with respect to Fig. 3.

As previously described, signals from the optical fiber may be carried (via a respectively coupled optical fiber) to a respective one of the first PSR 215a or second PSR 215b. The PSRs 215 may be configured to split an incoming Rx signal into two paths based on the polarization of the Rx signal (e.g., a TE path and a TM path).

In various examples, the Tx path may be TE-polarized and the Rx path may be TM-polarized. As previously described, in various examples, the TM polarized component of the Rx signal may be rotated to have a TE polarization by the respective PSR 215a, 215b. The split Rx signals may be multiplexed by a respective filter. For example, in some embodiments, the TE path may be demultiplexed via the hybrid WDM filter 220a, 220b. Correspondingly, the TM path may be demultiplexed via a respective WDM filter 225a, 225b, from which the Rx signal components may be demultiplexed and combined at the respective PDs 230a-230d.

As previously described with respect to Fig. 1, respective wavelengths may be extracted from the Rx signal via demultiplexing by respective hybrid WDM filters 220a, 220b, and respective WDM filters 225a, 225b. The outputs of the filters (e.g., the respective wavelengths) may be combined at the respective PD 230a-230d.

Similarly, for Tx signals, an optical signal from a Tx circuit (e.g., lasers 235a-235d and respective driver circuits), may be passed through the hybrid WDM filter 220a, 220b and transmitted over the TE channel of the PSR 205 to the optical fiber via fiber access interface 205. The hybrid WDM filters 220 may be utilized to reduce x-talk between channels, and further to reduce Tx insertion loss. A demultiplexer (or "demux") filter low cross-talk, and utilizes stacking of high-order filters (e.g., a serial placement of one or more high-order filters in succession), which increases insertion loss as the filters are cascaded at each stage. In contrast, for the mux, a single lower stage filter may be utilized to reduce insertion loss.

Accordingly, the hybrid WDM filter 220a, 220b design, separate stages may be implemented for both Tx (mux) and Rx (demux) channels. For example, for the Rx channel, the hybrid WDM filters 220 may include higher-order multiple-level (e.g., multiple stacked filters) for the Rx channels, and a lower-order single-level filter (e.g., a single filter at each stage) for the Tx channels. The filters used in each stage may, in various examples, be bandpass filters. Bandpass filters are filters configured to allow a band of wavelengths to pass through the filter, while attenuating wavelengths outside of the passband. In this way, for BIDI operation, the hybrid WDM filters 220 may optimize Tx and Rx channels separately, reducing insertion loss for Tx channels, and maintaining low x-talk on Rx channels. This has the further advantage of reducing filter device footprint as fewer filters need to be stacked for the Tx channel.

The order of the filter, as used herein, may refer to the number of filters that are cascaded. For example, a "lower" order filter may have a fewer number of cascaded filters or "stages," and therefore the band of wavelengths allowed to pass through the filter (e.g., a passband) may be have a shape with a more gradual (e.g., less sharp) cutoff relative to a "higher" order filter. Accordingly, a "higher" order filter may have a greater number of cascaded filters, which results in a passband with sharper edges (e.g., a sharper cutoff) relative to a "lower" order filter. The high-order and low-order filters in the hybrid WDM filters 220 (e.g., demux/mux filters) may be referred to as "component filters" of the hybrid WDM filters 220 (e.g., demux / mux filters). A component filter may, therefore, refer to individual bandpass filters in the first and second stages of the WDM filters 220.

Fig. 3 is a schematic diagram of a BIDI hybrid WDM filter 300 as implemented in circuit 200 of Fig. 2. According to various embodiments, the hybrid WDM filter 300 includes a first 4th order filter 305 and second 4th order filter 310 for the first stage, and a first 3rd order filter 315, second 3rd order filter 320, third 3rd order filter 325, and fourth 3rd order filter 330 comprising respective second stages.

The mux channels (e.g., ch 2 and ch 4), in various embodiments, use a single component filter for each stage (e.g., first 3rd order filter 315 for the second stage, and a first 4th order filter 305 for the first stage) to minimize insertion loss. In contrast, the demux channels (e.g., ch 1 and ch 3) may use two cascaded identical component filters for both the first stage and second stage. For example, the first 4th order filter 305 and second 4th order filter 310 may be cascaded, forming the first stage (e.g., two component filters). Similarly, the second 3rd order filter 320 may be cascaded, respectively, with third 3rd order filter 325 for ch 1, and fourth 3rd order filter 330 for ch 3. In this way, x-talk between channels is suppressed for demux channels (e.g., Rx channels), while insertion loss is doubled in comparison for mux channels (e.g., Tx channels).

In some embodiments, each respective channel (e.g., ch 1, ch 2, ch 3, and ch 4) may have a passband that is centered around a respective wavelength. For example, the first channel (ch 1) may have a passband centered around a wavelength corresponding to the wavelength of a respective PD, such as first PD 130a, 230a of Figs. 1 & 2. Thus, in some examples, ch 1 of the third 3rd order filter 325 may be configured to have a passband centered around the third wavelength. Ch 3 may correspond to the wavelength of a respective PD, such as, for example, second PD 130b, 230b (e.g., fourth wavelength). Thus, in some examples, ch 3 of the fourth 3rd order filter 330 may be configured to have a passband centered around the fourth wavelength.

Similarly, ch 2 of the first 3rd order filter 315 may have a passband centered around the wavelength of a signal generated by a respective laser, for example, the first laser 135a, 235a having a first wavelength. Thus, in some embodiments, ch 2 of the first 3rd order filter 315 may have a passband centered around the first wavelength. Ch 4 may be configured to have a passband centered around the wavelength of a signal generated by a respective laser, for example, the second laser 135b, 235b having a second wavelength. Thus, in some embodiments, ch 2 of the first 3rd order filter 315 may have a passband centered around the second wavelength. Each of the respective passbands may similarly be referred to as a "first," "second," "third," "fourth," etc., passbands corresponding to respective component filters.

It is to be understood that each of the "first," "second," "third," and "fourth" component filters, wavelengths, and passbands are numbered for purposes of differentiation only, and that in other embodiments, other numberings may be used to refer to the various component filters, wavelengths, and passbands. Thus, the numbering does not imply an order, sequence, or relationship between any such numbered elements (e.g., component filter, wavelength, passband, etc.) beyond what is set forth in the descriptions above, and as set forth in the embodiments below.

In some further examples, the lower order filter may have a wider passband (e.g., allowing a wider range of wavelengths to pass through), while a "higher" order filter may have multiple, narrower passbands (e.g., allowing a narrower range of wavelengths to pass through). For example, the first 4th order filter 305 may have a first passband having a window (also referred to as a "passband window") centered around the first wavelength (corresponding to ch 2) and a second passband having a window centered around the second wavelength (corresponding to ch 4). In some embodiments, the first 4th order filter 305 may further comprise multiple channels (e.g., a first channel and second channel). The first channel may be configured to have respective passbands centered around the first and second wavelength, as described above. The second channel of the first 4th order filter 305 may, correspondingly, be configured to have multiple passbands having respective windows centered around the third and fourth wavelengths.

In some examples, for the mux channels (Tx channels), the second stage may include a lower order filter, such as a 2nd order filter, to further reduce insertion loss. In yet further examples, lower or higher order filters may be utilized for the respective first and second stages of either the mux or demux channels. For example, in some embodiments, the first stage may include 3rd order filters, and the second stage may include 2nd order filters.

In some examples, the hybrid WDM filter may be applied to other wavelengths and/or more channel counts. For example, in DWDM wavelengths at C-band or L-band, a similar approach may be taken to divide wavelengths between Rx and Tx channels, and utilizing a hybrid WDM filter to handle mux / demux channels. In further embodiments, the filters may be configured to support additional channels. In the examples above, two Tx and two Rx channels have been described for purposes of explanation. In other examples, additional or fewer channels may be supported, such as 4 Tx and 4 Rx channels, or, as previously described, different allocations of channels may also be supported, such as 2 Tx and 6 Rx channels, or other division between the Rx and Tx channels.

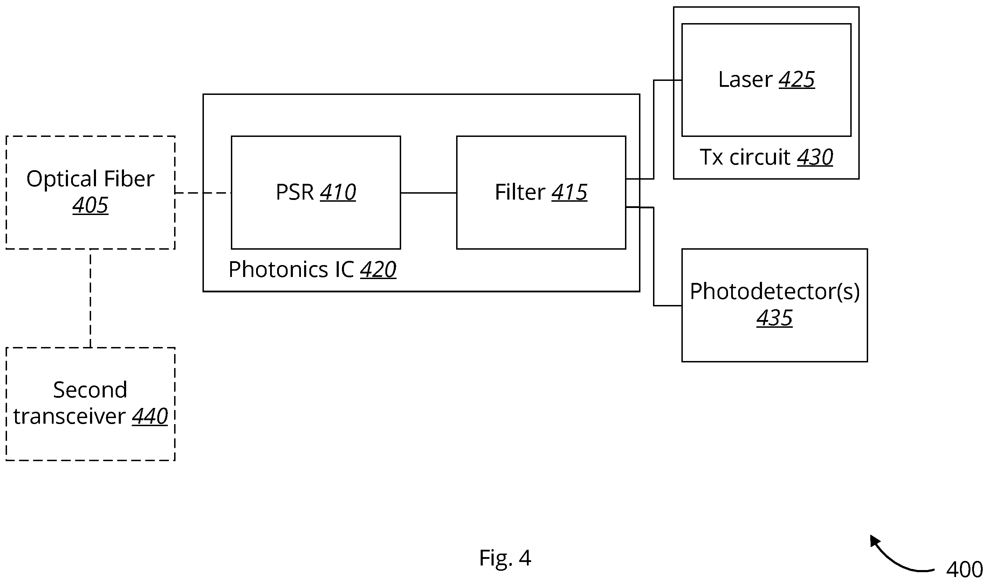

Fig. 4 is a schematic block diagram of a BIDI optical transceiver system 400, in accordance with various embodiments. The system 400 includes optical fiber 405, PSR 410, filter 415, which may be part of a photonics circuit 420, laser 425 which is part of a greater Tx circuit 430, and PD 435. The optical fiber 405 may be part of a fiber access interface, as previously described, which couples the system 400 to a second transceiver 440 for BIDI communication.

Accordingly, the photonics circuit 420 may, in various examples, be implemented as an integrated circuit (IC) 420. In some examples, the photonics circuit 420 may include all or part of the Tx circuit 430 and PD 435. In various examples, the PD 435 may include one or more PDs, as previously described with respect to Figs. 1-2.

In various examples, the photonics circuit 420 may be coupled to the optical fiber 405 via a fiber access interface, as previously described. In some examples, a coupler, such as a single-mode standard coupler (SSC), as previously described. In other examples, other types of couplers and/or connectors may be utilized to interface with the optical fiber 405. The optical fiber 405 may carry the signal to a second transceiver system 440. In some examples, the second transceiver system 440 may, like the system 400, be a BIDI optical transceiver system as described above with respect to Figs. 1-2. In other examples, the second transceiver 440 may be a conventional transceiver system. Thus, in various examples, the system 400 may be backwards compatible with existing and/or legacy transceiver systems.

While some features and aspects have been described with respect to the embodiments, one skilled in the art will recognize that numerous modifications are possible. For example, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Moreover, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise. Consequently, although several embodiments are described above, it will be appreciated that the invention is intended to cover all modifications and equivalents within the scope of the following claims.

## Claims

1. A circuit comprising:
a polarization splitter rotator configured to receive an input signal comprising two or more wavelengths, the input signal further comprising a first signal having a first polarization and a second signal having a second polarization,
wherein the polarization splitter rotator is configured to split the first and second signals, wherein splitting the first and second signals comprises directing the first signal to a first path, and the second signal to a second path, wherein the polarization splitter rotator is further configured to rotate the second signal, wherein rotating the second signal changes a polarization of the second signal to have the first polarization;
a first filter coupled to the first path, the first filter configured to
demultiplex two or more respective wavelengths from the first signal received from the first path,
wherein the first filter includes a first set of demultiplexer channels, and a first set multiplexer channels,
wherein the first set of demultiplexer channels includes two or more first demultiplexer channels,
wherein the first set of demultiplexer channels includes a first demultiplexer stage, the first demultiplexer stage including a first number of first component filters, and a second demultiplexer stage including a second number of second component filters having a second passband,
wherein the first set of multiplexer channels includes two or more multiplexer channels, wherein the first set of multiplexer channels includes a first multiplexer stage including a third number of third component filters, and a second multiplexer stage including a fourth number of fourth component filters,
wherein the third number is less than the first number, and fourth number is less than the second number.

2. The circuit of claim 1, further comprising:
a second filter coupled to the second path, wherein the second filter includes a second set of second demultiplexer channels, wherein the second set of demultiplexer channels includes two or more second demultiplexer channels,
in particular, wherein the second set of demultiplexer channels includes a third demultiplexer stage including a fifth number of fifth component filters, and a fourth demultiplexer stage including a sixth number of sixth component filters, wherein the fifth number is the same as the first number, and the sixth number is the same as the second number.

3. The circuit of claim 1 or 2, wherein the first, second, third, and fourth component filters are bandpass filters.

4. The circuit of claim 3, wherein the first component filters are configured to have a first passband, and the second component filters are configured to have a second passband, wherein the first passband is narrower than the second passband,
in particular, wherein the third component filters are configured to have the first passband, and the fourth component filters are configured to have the second passband.

5. The circuit of any of claims 1 to 4, wherein the first filter includes the same number of multiplexer channels as first demultiplexer channels.

6. The circuit of any of claims 1 to 5, wherein the two or more multiplexer channels are configured to receive a respective transmit signal having a respective wavelength, wherein the first filter is configured to multiplex the respective transmit signals into the first path.

7. The circuit of any of claims 1 to 6, wherein the first polarization is a transverse electric polarization, and wherein the second polarization is a transverse magnetic polarization.

8. A transceiver system comprising:
a polarization splitter rotator configured to receive an input signal comprising two or more wavelengths, the input signal further comprising a first signal having a first polarization and a second signal having a second polarization,
wherein the polarization splitter rotator is configured to split the first and second signals, wherein splitting the first and second signals comprises directing the first signal to a first path, and the second signal to a second path, wherein the polarization splitter rotator is further configured to rotate the second signal, wherein rotating the second signal changes a polarization of the second signal to have the first polarization;
a first filter coupled to the first path, the first filter configured to demultiplex two
or more respective wavelengths from the first signal received from the first path,
wherein the first filter includes a first set of demultiplexer channels, and a first set multiplexer channels,
wherein the first set of demultiplexer channels includes two or more first demultiplexer channels,
wherein the first set of demultiplexer channels includes a first demultiplexer stage, the first demultiplexer stage including a first number of first component filters, and a second demultiplexer stage including a second number of second component filters having a second passband,
wherein the first set of multiplexer channels includes two or more multiplexer channels, wherein the first set of multiplexer channels includes a first multiplexer stage including a third number of third component filters, and a second multiplexer stage including a fourth number of fourth component filters,
wherein the third number is less than the first number, and fourth number is less than the second number; and
two or more photodetectors coupled to a respective demultiplexer channel of the two or more demultiplexer channels, each photodetector configured to detect an amplitude of a respective wavelength of the two or more respective wavelengths of the first signal.

9. The system of claim 8, further comprising a second filter coupled to the second path, wherein the second filter includes a second set of second demultiplexer channels, wherein the second set of demultiplexer channels includes two or more second demultiplexer channels, wherein the second filter is configured to demultiplex two or more respective wavelengths from the second signal received from the second path, wherein the two or more respective wavelengths from the second signal are the same as the two or more respective wavelengths demultiplexed from the first signal.

10. The system of claim 8 or 9, further comprising two or more lasers coupled to a respective multiplexer channel of the two or more multiplexer channels, each laser configured to generate a respective signal transmit signal having a respective wavelength, and/or
wherein the first filter includes the same number of multiplexer channels as first demultiplexer channels.

11. The system of claim any of claims 8 to 10, wherein the first, second, third, and fourth component filters are bandpass filters, wherein the first component filters are configured to have a first passband, and the second component filters are configured to have a second passband, wherein the first passband is narrower than the second passband,
in particular, wherein the third component filters are configured to have the first passband, and each of the fourth component filters are configured to have a respective fourth passband.

12. The system of any of claims 8 to 11, wherein the two or more multiplexer channels are configured to receive the respective transmit signal from a respective laser of the two or more lasers, wherein the first filter is configured to multiplex the respective transmit signals into the first path.

13. A wavelength division multiplexing filter comprising:
a first side coupled to a first path, wherein a first signal is received from the first path, and a second side coupled to one or more photodetectors and one or more lasers;
a first set of demultiplexer channels comprising two or more demultiplexer channels, wherein the first set of demultiplexer channels includes a first demultiplexer stage, the first demultiplexer stage including a first number of first component filters, and a second demultiplexer stage including a second number of second component filters having a second passband,
a first set multiplexer channels comprising two or more multiplexer channels, wherein the first set of multiplexer channels includes a first multiplexer stage including a third number of third component filters, and a second multiplexer stage including a fourth number of fourth component filters,
wherein the third number is less than the first number, and fourth number is less than the second number.

14. The filter of claim 13, wherein the first, second, third, and fourth component filters are bandpass filters, wherein the first component filters are configured to have a first passband, and the second component filters are configured to have a second passband, wherein the first passband is narrower than the second passband, and/or
wherein the third component filters are configured to have the first passband.

15. The filter of claim 14, wherein a number of multiplexer channels is the same as the number of demultiplexer channels.
